# EUROPEAN PATENT APPLICATION

(11) **EP 1 928 191 A1**
(43) Date of publication of application: **04.06.2008**
(21) Application number: 07121769.9
(22) Date of filing: 28.11.2007
(51) Int. Cl.: H04Q 7/32

(54) **Apparatus and method for IDLE current saving in mobile communication terminal**

(30) Priority: 28.11.2006 KR 20060118061
(71) Applicant: Samsung Electronics Co., Ltd., Suwon-si, Gyeonggi-Do (KR)
(72) Inventor: Yoo, Taig-Jong, Gyeonggi-do (KR); Ha, Dong-In, Seoul (KR); Kang, Deog-Gwen, Anyang-si Gyeonggi-do (KR)
(74) Representative: Grünecker, Kinkeldey, Stockmair & Schwanhäusser Anwaltssozietät

(57) **Abstract**

Provided is an apparatus and method for idle state current saving in a mobile communication terminal. The method includes checking whether a BTS search event is generated when accessing a UMAN and being in an idle state, searching neighbor BTS information, checking whether a rove-out event is generated, identifying an AP list and checking whether there is previous rove-out BTS information, checking whether it is possible to rove out to a BTS associated with the stored BTS information, and roving out to the BTS.

## Description

The present invention relates generally to an apparatus and method for idle state current saving in a mobile communication terminal, and, in particular, to an apparatus and method for reducing a search for neighbor Base Transceiver Station (BTS) information for access to a cellular Radio Access Network (RAN) and reducing current consumption when in an idle state, when a dual-mode mobile communication terminal accessible to both a cellular RAN and an Unlicensed Mobile Access Network (UMAN) accesses the UMAN and is in the idle state.

At present, a dual-mode mobile communication terminal accessible to both a cellular RAN such as a Global System for Mobile communication (GSM) and a UMAN is coming to market to provide a communication service. The UMAN accesses a fixed Internet Protocol (IP) network via an Access Point (AP) and provides a mobile communication service.

The dual-mode mobile communication terminal accessible to the UMAN enables communication switching between the cellular RAN and the fixed IP network.

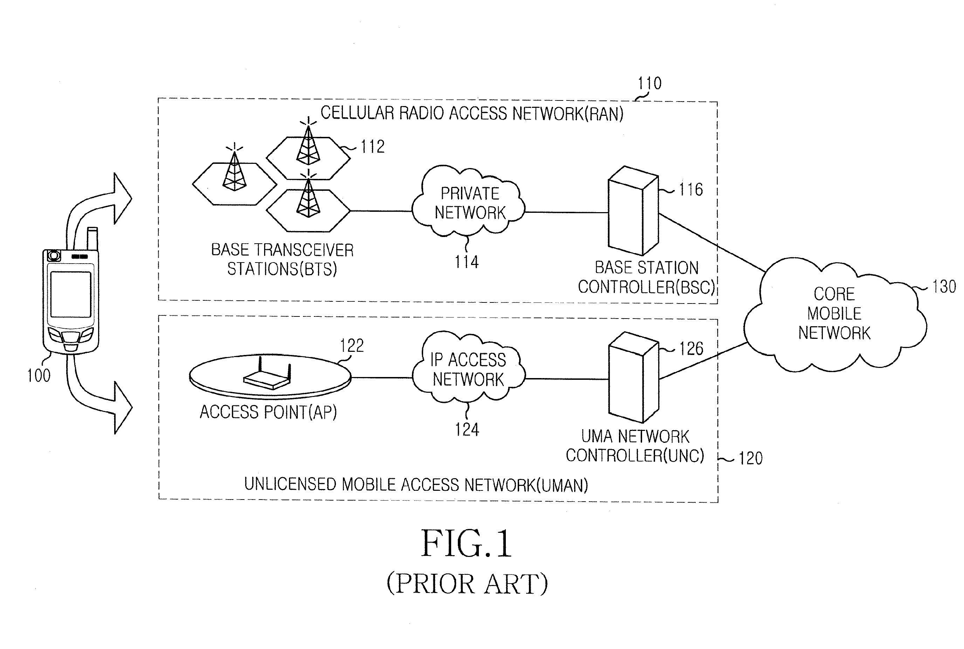

FIG. 1 illustrates architecture of a conventional mobile communication system enabling communication switching between a cellular RAN and a fixed IP network. Referring to FIG. 1, the dual-mode mobile communication terminal 100 is accessible to both a cellular RAN 110 and a UMAN 120 that is a fixed IP network. The dual-mode mobile communication terminal 100 is serviced by communication switching between the two networks using a core mobile network 130. The cellular RAN 110 provides a communication service via a Base Transceiver Station (BTS) 112, a private network 114, and a Base Station Controller (BSC) 116. The UMAN 120 provides a communication service via an AP 122, an IP access network 124, and a UMA Network Controller (UNC) 126.

The dual-mode mobile communication terminal 100 of FIG. 1 can be serviced by telephony service via the UMAN 120 in a less expensive manner than by the cellular RAN 110 without interruption, when moving to an area allowing a communication with the UMAN 120 that is the fixed IP network.

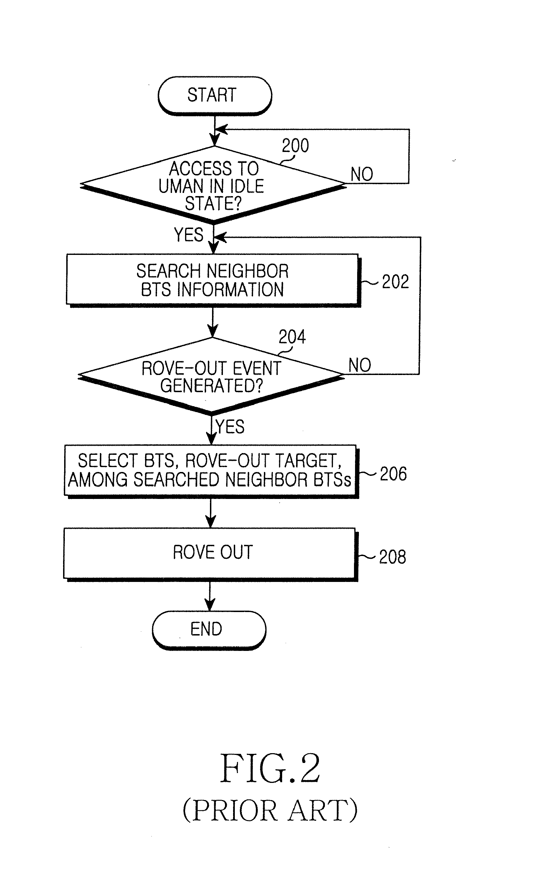

However, the dual-mode mobile communication terminal 100 has a problem of high current consumption when accessing the UMAN 120 and in idle state. The reason for current consumption when the dual-mode mobile communication terminal 100 accesses the UMAN 120 and is in the idle state is described in detail with reference to FIG. 2 .

FIG. 2 is a flowchart illustrating a conventional procedure of network switching when the dual-mode mobile communication terminal accesses the UMAN and is in the idle state. Referring to FIG. 2, in step 200, the dual-mode mobile communication terminal 100 checks whether it accesses the UMAN 120 and is in the idle state. In step 202, the dual-mode mobile communication terminal 100 searches neighbor BTS information and, in step 204, checks whether a rove-out event is generated.

Rove-out signifies network switching of the dual-mode mobile communication terminal 100 to the BTS 112 of the cellular RAN 110 in the idle state. In step 204, the dual-mode mobile communication terminal 100 determines that the rove-out event is generated when a Received Signal Strength Indication (RSSI) is smaller than a reference value or retransmission of a transmission packet is requested more than a preset number of times.

The dual-mode mobile communication terminal 100 maintains the idle state, returns to step 202, and again searches neighbor BTS information, when it is determined that the rove-out event is not generated in step 204.

Otherwise, in step 206, the dual-mode mobile communication terminal 100 selects a BTS that is a rove-out target among neighbor BTSs searched in step 202, when checking that the rove-out event is generated in step 204. In step 208, the dual-mode mobile communication terminal roves out to the selected BTS and performs network switching in the idle state.

Referring to FIG. 2, the dual-mode mobile communication terminal 100 senses the generation of the rove-out event in the idle state and continues to search the neighbor BTS that is the rove-out target at a predetermined interval of time until roving out. Therefore, current consumption is great in the idle state.

Also, the dual-mode mobile communication terminal 100 has a drawback in that a long time is taken for rove-out because it passes through a process of selecting the BTS, the rove-out target, among the searched neighbor BTSs when sensing the generation of the rove-out event in step 204, in spite of the fact that the roving-out BTS 112 is generally limited in number due to a characteristic of the fixed AP 122.

The present invention has been designed to substantially solve at least the above problems and/or disadvantages and to provide at least the advantages below. Accordingly, the object of the present invention is to provide an apparatus and method for idle state current saving in a mobile communication terminal.

This object is solved by the subject matter of the independent claims.

Preferred embodiments are defined in the dependent claims.

An aspect of the present invention is to provide an apparatus and method for reducing a search for neighbor BTS information for access to a cellular RAN and reducing a current consumption when a dual-mode mobile communication terminal accessible to both the cellular RAN and a UMAN accesses the UMAN and is in an idle state.

A further aspect of the present invention is to provide an apparatus and method for idle state current saving in a mobile communication terminal, for storing information on an accessed BTS together with information on an AP of a UMAN when the mobile communication terminal performs network switching to a cellular RAN while accessing the AP when in an idle state.

Yet another aspect of the present invention is to provide an apparatus and method for idle state current saving in a mobile communication terminal, for first identifying network switching to a BTS, which is accessed upon previous network switching from an AP of a UMAN, when the mobile communication terminal performs network switching to a cellular RAN while accessing the AP when in idle state.

According to one aspect of the present invention, there is provided an apparatus for idle state current saving in a mobile communication terminal. The apparatus includes a first communication unit, a second communication unit, a neighbor-cell identifying unit, a rove-out decider, a memory, and a rove-out processor. The first communication unit accesses a Base Transceiver Station (BTS) and communicates with a cellular Radio Access Network (RAN). The second communication unit accesses an Access Point (AP) and communicates with an Unlicensed Mobile Access Network (UMAN). Upon sensing of generation of a BTS search event, the neighbor-cell identifying unit searches neighbor BTS information when the mobile communication terminal accesses the UMAN via the second communication unit and is in idle state. The rove-out decider checks whether a rove-out event is generated when the mobile communication terminal accesses the UMAN via the second communication unit and is in the idle state. The memory stores an AP list having information on accessed APs and information on a BTS that is accessed upon roving out from each AP. Upon receipt of a rove-out request from the rove-out decider, the rove-out processor first attempts to rove out to a BTS, which is accessed upon previous roving out from the AP under access, when the mobile communication terminal accesses the UMAN and is in the idle state.

According to another aspect of the present invention, there is provided a method for idle state current saving in a mobile communication terminal. The method includes checking whether a BTS search event is generated when accessing a UMAN and being in idle state, searching neighbor BTS information when sensing generation of the BTS search event, checking whether a rove-out event is generated, identifying an AP list and checking whether there is previous rove-out BTS information in information on an AP under access when sensing generation of the rove-out event, checking whether it is possible to rove out to a BTS associated with the stored BTS information when checking that there is the stored BTS information, which is the previous rove-out BTS information, in the under-access AP information, and roving out to the BTS when checking that it is possible to rove out to the BTS.

The above object and other aspects, features and advantages of the present invention will become more apparent from the following detailed description when taken in conjunction with the accompanying drawings in which:
FIG. 1 illustrates architecture of a conventional mobile communication system enabling communication switching between a cellular RAN and a fixed IP network;
FIG. 2 is a flowchart illustrating a conventional procedure of network switching when a dual-mode mobile communication terminal accesses a UMAN and is in an idle state;
FIG. 3 illustrates architecture of a mobile communication terminal saving an electric current in an idle state according to the present invention; and
FIG. 4 is a flowchart illustrating a procedure of network switching when a dual-mode mobile communication terminal accesses a UMAN and is in an idle state according to the present invention.

Preferred embodiments of the present invention will be described herein below with reference to the accompanying drawings. In the following description, well-known functions or constructions are not described in detail since they would obscure the invention in unnecessary detail.

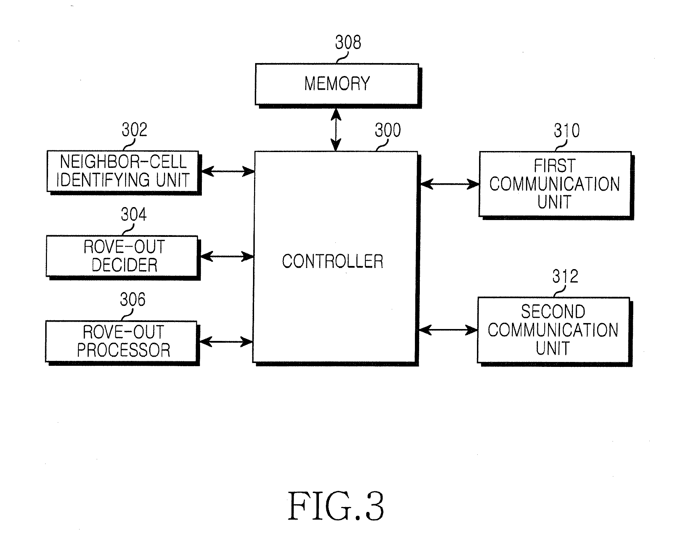

FIG. 3 illustrates architecture of a mobile communication terminal saving an electric current in an idle state according to the present invention. Referring to FIG. 3, the dual-mode mobile communication terminal according to the present invention includes a controller 300, a neighbor-cell identifying unit 302, a rove-out decider 304, a rove-out processor 306, a memory 308, a first communication unit 310, and a second communication unit 312.

The memory 308 stores a program for controlling a general operation of the dual-mode mobile communication terminal, an application program, and storage data (a phone number, a Short Message Service (SMS) message, a compressed image file, a moving picture, etc.). In addition, the memory 308 stores and manages a list of APs according to the present invention. The AP list includes a name of an accessed AP, a main channel, and AP information such as an available Internet Protocol (IP) as well as information on a BTS that is accessed upon roving out from the AP.

The first communication unit 310 is a device for accessing a BTS and communicating with a cellular RAN. In the reception mode, the first communication unit 310 receives a radio frequency signal via an antenna, processes the received signal by frequency-down conversion, and processes the signal by despreading and channel decoding. In transmission mode, the first communication unit 310 processes data by channel coding and spreading, processes the data by frequency-up conversion, and transmits the data via the antenna. The first communication unit 310 receives system information for searching a neighbor cell and identifying cell information for cell selection.

The second communication unit 312 is a device for accessing an AP and communicating with a UMAN that is an IP network. The second communication unit 312 exchanges packet data via the AP. A typical example of the second communication unit 312 is a wireless Local Area Network (LAN).

Upon sensing of generation of a BTS search event, the neighbor-cell identifying unit 302 searches neighbor BTS information, when the dual-mode mobile communication terminal accesses the UMAN via the second communication unit 312 and is in the idle state. Regarding deciding on whether the BTS search event is generated, it is determined that the BTS search event is generated when a Received Signal Strength Indication (RSSI) from an accessed AP is smaller than a search reference value and is greater than a rove-out reference value. Alternately, it is determined that the BTS search event is generated when retransmission of a transmission packet is requested greater than the number of times of search reference and is smaller than the number of times of rove-out reference.

The rove-out decider 304 checks whether a rove-out event is generated using the RSSI from the accessed AP or the number of times of retransmission of a transmission packet when the dual-mode mobile communication terminal accesses the UMAN via the second communication unit 312 and is in the idle state. Regarding deciding whether the rove-out event is generated, it is determined that the rove-out event is generated when the RSSI from the accessed AP is smaller than the rove-out reference value. Alternately, it is determined that the rove-out event is generated when retransmission of a transmission packet is requested greater than the number of times of rove-out reference.

Upon receipt of a rove-out request from the rove-out decider 304, the rove-out processor 306 identifies a list of APs stored in the memory 308 and checks whether previous rove-out BTS information exists on an AP under access, when the dual-mode mobile communication terminal accesses the UMAN via the second communication unit 312 and is in the idle state. If so, the rove-out processor 306 checks whether it is possible to rove out to a BTS associated with the stored previous rove-out BTS information. If so, the rove-out processor 306 roves out to the BTS and performs network switching to the cellular RAN. Otherwise, the rove-out processor 306 searches the neighbor BTS information identified by the neighbor-cell identifying unit 302 for a BTS, a rove-out target, and roves out to the searched BTS, when there is not previous rove-out BTS information in the under-access AP information or it is impossible, though so, to rove out to the BTS associated with the stored previous rove-out BTS information.

Upon roving out, the rove-out processor 306 roves out to the under-access AP of the AP list stored in the memory 308 and stores information on a BTS that is a network-switching target.

The controller 300 controls the neighbor-cell identifying unit 302, the rove-out decider 304, and the rove-out processor 306. In other words, the controller 300 can perform functions of the neighbor-cell identifying unit 302, the rove-out decider 304, and the rove-out processor 306. These are separately constructed and shown to distinguish and describe respective functions in the present invention. Thus, when a product is actually realized, it can be either constructed for the controller 300 to process all of them or can be constructed for the controller 300 to process only part of them.

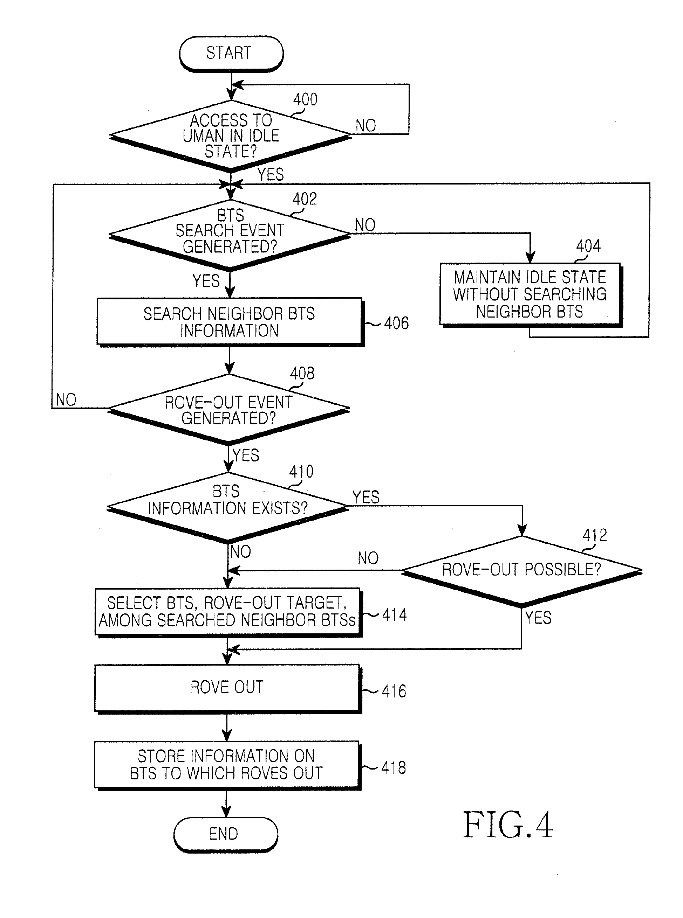

A method for saving an electric current in idle state in the above-constructed dual-mode mobile communication terminal according to the present invention is described with reference to FIG. 4, which is a flowchart illustrating a procedure of network switching when a dual-mode mobile communication terminal accesses a UMAN and is in an idle state according to the present invention.

Referring to FIG. 4, in step 400, the dual-mode mobile communication terminal according to the present invention checks whether it accesses the UMAN and is in the idle state. If so, in step 402, the dual-mode mobile communication terminal checks whether a BTS search event is generated. Otherwise, the dual-mode mobile communication terminal repeats step 400. In step 404, the dual-mode mobile communication terminal maintains the idle state for a predetermined time without searching a neighbor BTS when it is determined that the BTS search event is not generated. Then, the dual-mode mobile communication terminal repeats step 402.

In step 406, the dual-mode mobile communication terminal searches neighbor BTS information when it is determined that the BTS search event is generated in step 402. In step 408, the dual-mode mobile communication terminal checks whether a rove-out event is generated. The dual-mode mobile communication terminal maintains the idle state and returns to step 402, when it is determined that the rove-out event is not generated.

In step 410, the dual-mode mobile communication terminal identifies a list of APs and checks whether there is previous rove-out BTS information in information on an AP under access when it is determined that the rove-out event is generated in step 408. In step 412, the dual-mode mobile communication terminal checks whether it is possible to rove out to a BTS associated with the stored previous rove-out BTS information when it is determined that there is the previous rove-out BTS information in the under-access AP information. In step 416, the dual-mode mobile communication terminal roves out to the BTS when it is determined that it is possible to rove out to the BTS.

In step 414, the dual-mode mobile communication terminal searches the searched neighbor BTS information of step 406 for a BTS, a rove-out target, when it is determined that there is previous rove-out BTS information does not exist in the under-access AP information in step 410 or it is determined that it is impossible to rove out to the BTS in step 412. In step 416, the dual-mode mobile communication terminal roves out to the searched BTS.

After that, in step 418, the dual-mode mobile communication terminal roves out to the under-access AP information of the AP list and updates or stores information on the BTS that is a network-switching target.

As described above, the present invention provides an apparatus and method for idle current reduction in a mobile communication terminal. The present invention searches neighbor BTS information only when an RSSI from an AP is less than a reference value, when a dual-mode mobile communication terminal accessible to both a cellular RAN and a UMAN accesses the UMAN and is in idle state. The present invention first identifies network switching to a BTS, which is accessed upon previous network switching from the AP, when the dual-mode mobile communication terminal performs network switching to the cellular RAN. Thus, the present invention reduces current consumption when the dual-mode mobile communication terminal accesses the UMAN and is in the idle state and reduces the time for searching for a BTS when the dual-mode mobile communication terminal intends to rove out.

While the invention has been shown and described with reference to certain preferred embodiments thereof, it will be understood by those skilled in the art that various changes in form and details may be made therein without departing from the scope of the invention as defined by the appended claims.

## Claims

1. An apparatus for idle state current savings in a mobile communication terminal, the apparatus comprising:
a first communication unit for accessing a base transceiver station and communicating with a cellular radio access network;
a second communication unit for accessing an access point and communicating with an Unlicensed Mobile Access Network, UMAN;
a neighbor-cell identifying unit for, upon sensing of generation of a base transceiver station search event, searching neighbor base transceiver station information when the mobile communication terminal accesses the UMAN via the second communication unit and is in an idle state;
a rove-out decider for checking whether a rove-out event is generated when the mobile communication terminal accesses the UMAN via the second communication unit when in the idle state;
a memory for storing an access point list having information on accessed access points and information on a base transceiver station that is accessed upon roving out from each access point; and
a rove-out processor for, upon receipt of a rove-out request from the rove-out decider, first attempting to rove out to a base transceiver station, which is accessed upon previous roving out from the access point, when the mobile communication terminal accesses the UMAN and when in the idle state.

2. The apparatus of claim 1, wherein when the mobile communication terminal accesses the UMAN via the second mobile communication unit when in the idle state, the rove-out processor identifies the access point list stored in the memory and checks whether there is previous rove-out base transceiver station information regarding the under-access access point when receiving a rove-out request from the rove-out decider, checks for possible rove out to a base transceiver station associated with the stored previous rove-out base transceiver station information when checking that there is the previous rove-out base transceiver station information, and roves out to the stored base transceiver station when checking for possible rove out.

3. The apparatus of claim 2, wherein when there is not stored base transceiver station information, which is the previous rove-out base transceiver station information, in the under-access access point information of the access point list or when not possible to rove out to the base transceiver station, the rove-out processor searches the neighbor base transceiver station information searched by the neighbor-cell identifying unit for a base transceiver station rove-out target, and roves out to the searched base transceiver station.

4. The apparatus of claim 3, wherein after roving out, the rove-out processor stores information on the base transceiver station rove-out target in the under-access access point information of the access point list.

5. The apparatus of one of claims 1 to 4, wherein the neighbor-cell identifying unit determines that the base transceiver station search event is generated when a Received Signal Strength Indication, RSSI, from the under-access access point is smaller than a search reference value and is greater than a rove-out reference value.

6. The apparatus of one of claims 1 to 4, wherein the neighbor-cell identifying unit determines that the base transceiver station search event is generated when retransmission of a transmission packet is requested greater than a number of times of search reference and fewer than a number of times of a rove-out reference.

7. The apparatus of one of claims 1 to 6, wherein the rove-out decider determines that the rove-out event is generated when an RSSI from the under-access access point is less than a rove-out reference value.

8. The apparatus of one of claims 1 to 6, wherein the rove-out decider determines that the rove-out event is generated when retransmission of a transmission packet is requested greater than a number of times of a rove-out reference.

9. A method for idle state current savings in a mobile communication terminal, the method comprising:
checking whether a base transceiver station search event is generated when accessing a UMAN when in an idle state;
searching neighbor base transceiver station information when sensing generation of the base transceiver station search event;
checking whether a rove-out event is generated;
identifying an access point list and checking whether there is previous rove-out base transceiver station information in regard to an access point under access, when sensing generation of the rove-out event;
checking for possible rove out to a base transceiver station associated with the stored base transceiver station information when checking that there is stored base transceiver station information, which is the previous rove-out base transceiver station information, in under-access access point information; and
roving out to the base transceiver station when checking for possible rove out to the base transceiver station.

10. The method of claim 9, wherein the checking as to whether the base transceiver station search event is generated and the checking as to whether the rove-out event is generated are repeated at a predetermined interval of time.

11. The method of claim 9 or 10, further comprising searching the searched neighbor base transceiver station information for a base transceiver station, which is a roving-out target, and roving out to the searched base transceiver station, when it is determined that there is not stored base transceiver station information or it is impossible to rove out to the base transceiver station associated with the stored base transceiver station information.

12. The method of claim 11, further comprising storing information on the base transceiver station, which is the roving-out target, in the under-access access point information of the access point list after searching of the neighbor base transceiver station information for the base transceiver station that is the roving-out target and roving out to the searched base transceiver station.

13. The method of one of claims 9 to 12, wherein the base transceiver station search event is generated when an RSSI from the under-access access point is less than a search reference value and is more than a rove-out reference value.

14. The method of one of claims 9 to 12, wherein the base transceiver station search event is generated when retransmission of a transmission packet is requested more than the number of times of search reference and is smaller than the number of times of rove-out reference.

15. The method of one of claims 9 to 14, wherein the rove-out event is generated when an RSSI from the under-access access point is less than a rove-out reference value.

16. The method of one of claims 9 to 14, wherein the rove-out event is generated when retransmission of a transmission packet is requested more than a number of times of rove-out reference.

17. A method for idle state current savings in a mobile communication terminal, the method comprising:
checking an access point list to identify a previous rove-out base transceiver station of a cellular network when sensing generation of a rove-out event in a Unlicensed Mobile Access Network, UMAN, access;
roving out to the base transceiver station of a cellular network.

18. An apparatus for idle state current savings in a mobile communication terminal, the apparatus comprising:
means for checking an access point list to identify a previous rove-out base transceiver station of a cellular network when sensing generation of a rove-out event in a Unlicensed Mobile Access Network, UMAN, access;
means for roving out to the base transceiver station of a cellular network.
